# FASCICULE DE BREVET EUROPEEN

(11) **EP 0 277 873 B1**
(45) Date de publication et mention de la délivrance du brevet: **08.09.1993**
(21) Numéro de dépôt: 88400183.5
(22) Date de dépôt: 27.01.1988
(51) Int. Cl.: H01R 23/70

(54) **Dispositif de connexion à autoverrouillage pour carte présentant des plages de contact en bout**
Selbstverriegelungssteckverbindung für Karten mit Randkontaktflächen
Self-latching connection device for a card with an edge contact area

(30) Priorité: 30.01.1987 FR 8701143
(43) Date de publication de la demande: 10.08.1988
(73) Titulaire: FRAMATOME CONNECTORS FRANCE, 78000 Versailles (FR)
(72) Inventeur: Thenaisie, Jacky, F-72000 Le Mans (FR); Lenoir, Michel, F-72450 Montfort Le Genois (FR)
(74) Mandataire: Fort, Jacques

(56) Documents cités:
- EP-A- 0 201 236
- US-A- 3 317 885

## Description

La présente invention concerne les systèmes comportant des cartes munies de plages de contact électrique en bout et destinées à être introduites dans un boîtier muni d'un dispositif de connexion permettant d'établir des liaisons électriques avec les plages de contact de la carte. L'invention trouve une application particulièrement importante dans les systèmes de lecture de cartes dites intelligentes ou à mémoire, constituées par une plaque de quelques millimètres d'épaisseur contenant des composants électroniques de mémorisation et de traitement de données, qui doit porter un grand nombre de contacts, dépassant souvent 40. Le dispositif de connexion doit être à même de subir sans dégradation plusieurs dizaines de milliers d'opérations de connexion et de déconnexion.

L'invention ne se limite cependant pas à ce cas particulier et elle est utilisable chaque fois qu'il est nécessaire ou souhaitable de disposer d'un dispositif de connexion devant subir, entre entretiens ou réparations, un grand nombre d'opérations.

On connaît déjà des lecteurs de carte comportant un mécanisme d'entraînement qui prélève la carte et la met dans une position de lecture déterminée où elle reste, hors d'accès de l'utilisateur, pendant toute la durée de la transaction. Ces lecteurs sont coûteux et volumineux. Ils ne sont guère acceptables que pour les terminaux bancaires.

On connaît également des lecteurs simples dans lesquels on enfonce simplement la carte dans un boîtier jusqu'à une position nominale de butée, pour laquelle il y a établissement de liaisons électriques entre des plages de contact prévues sur la carte et des contacts glissants appartenant au lecteur. Cette solution a l'inconvénient de provoquer une usure rapide des surfaces de contact.

On connaît enfin (EP-A-0 201 236) un dispositif de connexion entre une carte de circuit intégré et un connecteur sur tranche, dans lequel le connecteur comprend des lames flexibles de contact destinées à s'appuyer sur des plages de contact de la carte et des cliquets destinés à s'engager dans des lentes de la carte et à l'immobiliser à l'état connecté.

L'invention vise à fournir un dispositif de connexion à autoverrouillage pour carte présentant des plages de contact électrique en bout, répondant mieux que ceux antérieurement connus aux exigences de la pratique, notamment en ce qu'il est de constitution simple, en ce qu'il réduit l'usure des contacts et permet en conséquence un nombre élevé de connexions et de déconnexions entre opérations d'entretien ou de réparation, et en ce qu'il assure un autoverrouillage de la carte dans une position de consigne des éléments de contact.

Dans ce but, l'invention propose un dispositif de connexion conforme à la revendication 1.

Le terme "carte" utilisé ci-dessus et dans l'ensemble de la description doit être interprété de façon large et ne désigne pas obligatoirement un objet plat d'une seule pièce. Dans l'application de l'invention à un dispositif de connexion appartenant à un système de lecture de carte à mémoire par exemple, la "carte" au sens du présent brevet sera généralement constituée par un corps, constituant la partie active et contenant les composants électroniques, et un cadre dans lequel est contenu le corps et qui est muni d'une barrette formant connecteur, munie des plages de contact.

Le verrou peut avoir des constitutions extrêmement variées. Il peut notamment comporter une lame terminée par un téton de verrouillage qui s'engage dans une came en forme de rainure ménagée dans la partie terminale de la carte, sur une arête latérale de cette dernière, cette lame étant flexible transversalement au plan de la carte et portée par un levier mobile autour d'un axe perpendiculaire au plan d'introduction de la carte. Pour éviter que l'utilisateur de la carte ne puisse l'arracher pour la retirer, ce qui risquerait de briser le verrou, le couloir ménagé dans le boîtier a avantageusement une profondeur telle que l'arête de la carte opposée à celle qui porte les plages de contact vient affleurer l'entrée du couloir lorsque la carte est en butée.

Pour éviter le risque d'établissement accidentel de liaison électrique avec les contacts, ou de pollutions par exemple par les doigts de l'utilisateur, les plages de contact électrique sont avantageusement disposées au fond d'encoches ou de rainures parallèles pratiquées sur la partie terminale de la carte et débouchant sur l'arête située à l'avant dans le sens de l'introduction.

L'invention sera mieux comprise à la lecture de la description qui suit d'un mode particulier de réalisation de l'invention, donné à titre d'exemple non limitatif. La description se réfère aux dessins qui l'accompagnent, dans lesquels :
- la figure 1 est une vue schématique en perspective, avec arrachements, montrant la constitution de principe des moyens de verrouillage mécanique d'un dispositif suivant l'invention ;
- la figure 2 est un schéma, en coupe suivant la ligne II-II de la figure 1, montrant le mode d'établissement de la liaison entre les plages de contact d'une carte et les lames de contact du boîtier ;
- la figure 3 montre une constitution réelle possible des divers moyens montrés en figure 1 et 2, vue depuis le dessus de la figure 1 ;
- les figures 4A à 4E montrent les positions successives prises par le verrou et la came lors des opérations de connexion et de déconnexion.

Le dispositif de connexion suivant l'invention peut être regardé comme comportant des moyens portés par chacune des cartes à utiliser et des moyens portés par chacun des appareils de lecture destinés à les recevoir.

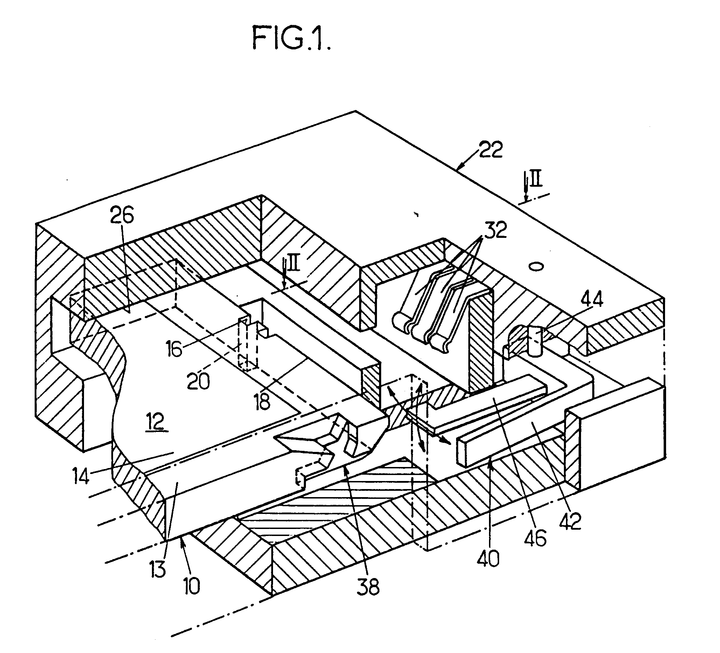

La carte 10 dont une fraction apparaît sur la figure 1, se présente sous forme d'une plaque de quelques millimètres d'épaisseur. Elle est généralement constituée par un corps 12 constituant la partie active et contenant les composants électroniques et un cadre 13 contenant le corps 12 et muni d'un connecteur 14. Le cadre sera généralement constitué en plastique renforcé isolant et fabriqué par moulage.

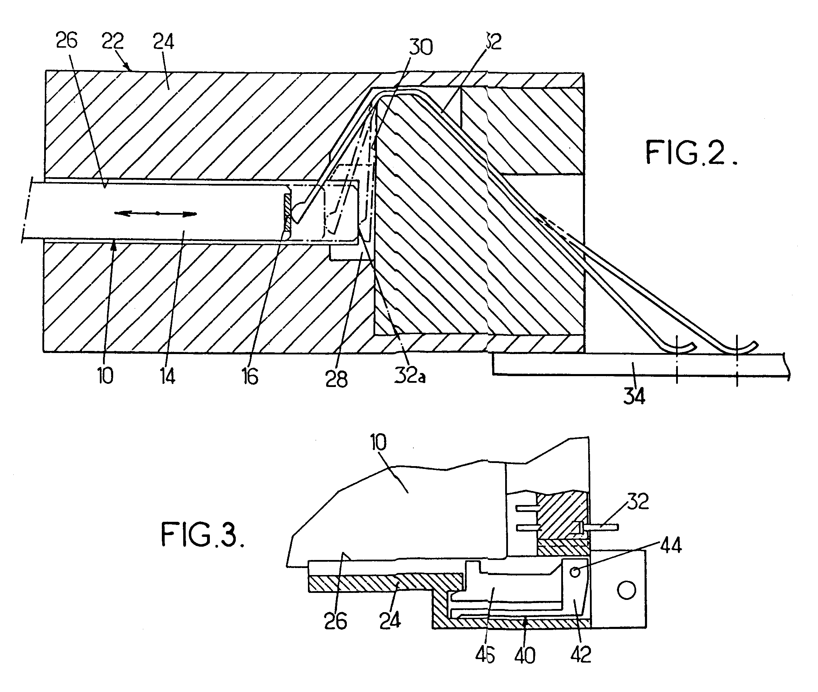

Dans la tranche terminale du connecteur 14 sont ménagées des rainures parallèles 16, dont une seule est montrée schématiquement en figure 1 et 2. Le fond de chaque rainure est revêtu, sur la majeure partie de la sa longueur, d'une plage métallique de contact électrique 20. Le jeu isolant qui subsiste entre les contacts 20 d'une part, les grandes faces et la tranche 18 du connecteur d'autre part, permet d'éviter que le contact métallique ne soit souillé par les doigts du manipulateur de la carte.

La carte est généralement muni de moyens de détrompage interdistant de l'enforcer dans une orientation incorrecte. Ces moyens, pouvant avoir n'importe laquelle des constitutions classiques, ne sont pas représentés. Ils peuvent être constitués par une nervure ménagée parallèlement à l'une des tranches latérales de la carte et destinée à coopérer avec une saillie prévue dans chaque appareil de lecture et qui, de plus, participe au guidage de la carte.

L'appareil de lecture n'est pas représenté dans son ensemble sur les figures. Sa constitution générale est fixée par les caractéristiques de la carte. Il comporte un lecteur proprement dit 22 ayant un boîtier 24 dans lequel est prévu un couloir 26 d'insertion et de guidage de cartes fermé par un fond 30 constituant butée. La partie terminale du couloir 26, à proximité du fond, est élargie de façon à constituer une chambre 28 dont le rôle apparaîtra plus loin.

Le boîtier 24 porte des lames élastiques 32 en nombre égal à celui des plages de contacts 20 et disposés au même écartement. Les lames ont une partie médiane encastrée dans le boîtier 24 et deux parties terminales. La partie terminale arrière de chaque lame constitue une patte de raccordement avec une carte de circuit imprimé 34 appartenant au dispositif de lecture (figure 2). La partie terminale avant est libre et constitue un contact électrique élastique, terminé par un bossage d'appui. Au repos les lames ont la disposition représentée en traits pleins sur la figure 2 et prennent appui contre la paroi de la chambre 28 comme indiqué en 36. Ces lames sont prévues pour fléchir sous la poussée de la carte 10, jusqu'à venir éventuellement en butée contre le fond 30 du couloir qui limite l'insertion de la carte.

Les lames peuvent être constituées en bronze phosphoreux ou en bronze au béryllium et avoir une épaisseur d'environ 0,2 mm et une longueur de leur partie avant libre d'une dizaine de millimètres.

Deux jeux de lames peuvent être prévus, les lames d'un jeu étant disposées en quinconce par rapport aux lames de l'autre. Mais cette disposition n'est pas obligatoire et un seul jeu de lames est prévu dans le mode de réalisation illustré.

Le dispositif de connexion comporte encore des moyens d'autoverrouillage à connexion et déconnexion par poussée.

Une partie de ces moyens est portée par le cadre 10. Dans le mode de réalisation illustré sur les figures ils comprennent une came ménagée sur l'une des tranches latérales du cadre 13. Dans la pratique cependant, on aura intérêt à prévoir une came de chaque côté, pour mieux fixer la position de verrouillage de la carte et assurer la symétrie. Cette came 38, qui sera décrite en détail plus loin, coopère avec un verrou élastique 40 porté par le boîtier 24. Ce verrou se compose d'un levier coudé 42 et d'une lame élastique 46. Le levier coudé 42 est monté sur le boîtier de façon à pouvoir tourner autour d'un axe 44 perpendiculaire au plan d'introduction de la carte 10. Le débattement angulaire du levier est limité par les dimensions d'un chambrage ménagé pour le recevoir dans le boîtier 24. Dans le bras du levier 42 muni de l'axe 44 est encastrée la lame élastique de verrouillage 46 capable de fléchir perpendiculairement au plan d'introduction de la carte, de part et d'autre de la position de repos dans laquelle elle est montrée en figure 1.

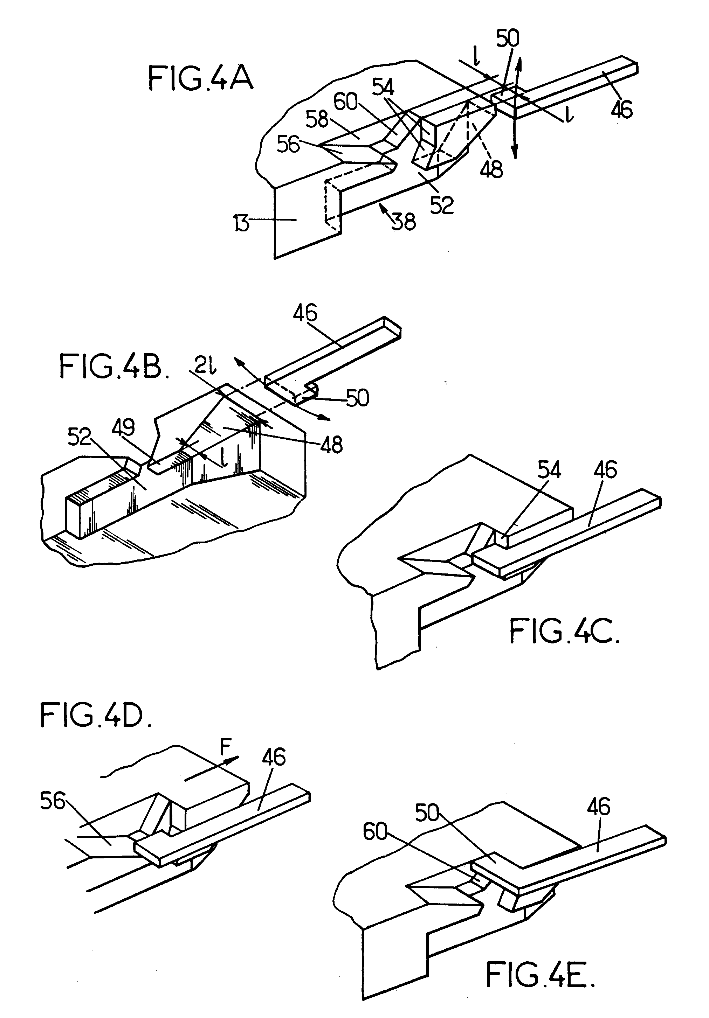

La figure 3 montre une constitution possible du verrou 40 porté par le boîtier 24. On voit que l'ensemble constitué par le levier 42 et la lame élastique 44 est emprisonné dans le chambrage du boîtier. La lame élastique 46 peut se déplacer légèrement dans le plan de la carte en déformant le bras du levier 42 écarté de l'axe 44, mais elle ne peut par contre se déplacer vers l'intérieur à cause de son appui. La lame 46 est par contre libre de flechir dans un plan perpendiculaire au plan d'introduction de la carte, guidée par glissement dans le couloir 26.

La came 38 peut notamment avoir la constitution montrée schématiquement sur les figures 4A et 4B qui sont des vues en perspective, respectivement de dessus depuis l'arrière et de dessous depuis l'avant.

Pour simplifier la description de la came, on appelera par la suite "surface frontales" celles qui ont une orientation telle que lorsqu'on enfonce la carte elles tendent à déformer la lame élastique 46, "surfaces de recul" celles qui ne permettent pas d'exercer un tel effort.

La came occupe, sur la tranche latérale du cadre 13, une largeur 2ℓ. Elle présente à l'avant une face frontale inclinée 48 dont la largeur est de 2ℓ sur la tranche avant du boîtier 13 et se réduit à ℓ à l'arrière. Au repos, la lame élastique 46 est disposée de telle façon qu'une saillie terminale 50 qu'elle porte soit en face du début de la face frontale 48. Celle-ci est inclinée par rapport au plan de la carte de façon que l'introduction progressive de la carte fléchisse la lame 46 vers le bas.

La surface 48 se raccorde à une surface 49 (figure 4B) parallèle à la direction d'introduction, le long de laquelle la saillie 50 glisse en étant retenue latéralement par un flanc 52 dont la distance à la tranche latérale de la carte est égale à ℓ. Lorsque l'introduction de la carte est suffisante pour que la saillie 50 arrive au bout de la surface 49 la lame 46 se redresse et la saillie, toujours retenue par le flanc 52, est emprisonée dans le dièdre constituée de deux surfaces de recul 54 (figure 4A).

La came présente une autre surface frontale 56 faisant un angle avec le plan d'introduction de la carte, placée de façon à fléchir la lame élastique 46 vers le haut et à permettre à la saillie 50 de quitter son appui contre le flanc 52 pour venir en appui contre un second flanc 58, cette fois à distance 2ℓ de la tranche latérale.

La saillie 50 est alors libre de quitter la carte en glissant le long d'une surface de recul oblique 60.

Le dispositif qui vient d'être décrit fonctionne de la façon suivante.

Lorsqu'on introduit la carte 10, le connecteur vient en butée contre les lames de contact 32 (comme indiqué en traits pleins sur la figure 2). Si on continue d'enfoncer la carte 10, les lames 36 fléchissent. La lame élastique 46 du verrou 40 vient alors en contact avec la surface frontale 48 et, au fur et à mesure de l'enfoncement, il se produit :
- un glissement de la lame élastique 46 du verrou jusqu'à ce qu'elle dépasse la surface 50, pour provoquer le verrouillage ;
- une flexion des lames 32, qui peuvent venir jusqu'à la position indiquée en 32a sur la figure 2.

Au cours de la flexion des lames 32, leurs zones de contact se déplacent très légèrement par rapport aux plages 16 et assurent un autonettoyage de ces dernières.

Lorsque l'on relache la carte, les lames élastiques 32 la repoussent vers l'arrière jusqu'au moment où la carte est retenue par les lames élastiques 46 du verrou dans la position montrée en figure 4C.

Pour éviter que l'utilisateur de la carte n'ait la tentation de retirer ensuite cette dernière en l'arrachant, il est préférable que le couloir 26 ait une profondeur correspondant à la longueur de la carte, de façon qu'elle ne déborde que de quelques millimètres lorsqu'elle est en position de lecture. On peut même prévoir, dans la face avant du boîtier 24, un évidement correspondant à la taille d'un doigt.

Pour déverrouiller la carte, il suffit d'exercer une seconde poussée sur cette dernière pour l'amener de nouveau en butée. Comme le montre la figure 4D, une poussée exercée dans la direction de la flèche F amène la surface frontale inclinée 56 sous la lame élastique 46 et la soulève au dessus de la surface de recul 60. L'élasticité du levier 42 fait alors passer la saillie 50 de la lame 46 au dessus de la surface de recul 60, jusqu'à ce qu'elle soit en contact de glissement avec le flanc 58.

Si on relache alors la carte, les lames élastiques de contact 32 la repoussent et la saillie 50 glisse le long de la surface de recul 60 et s'échappe au dessus de la carte, comme le montre la figure 4E.

On voit que l'invention permet de réduire l'usure due au frottement des contacts, du fait que le déplacement de ces derniers est de quelques dizièmes de millimètres seulement. Du fait que le contact définitif s'établit pour une position des lames élastiques de contact intermédiaire entre les positions de butée (comme le montre la figure 1) les liaisons s'effectuent sur des zones nettoyées.

## Revendications

1. Dispositif de connexion comprenant d'une part une carte présentant des plages de contact électrique (20) en bout et une came (38) ménagée sur la partie terminale munie des contacts en bout et d'autre part un boitier de réception (22) formant un couloir (26) d'introduction de la carte dans lequel est placée une butée limitant l'insertion de la carte, portant des lames flexibles (32) de contact électrique placées de façon à venir en appui contre lesdites plages (20) avant venue en appui de la carte contre la butée lors de l'insertion et à exercer sur la carte un effort tendant à l'écarter de la butée ; et un verrou élastique (40) porté par le boitier et coopérant avec la came, la came et le verrou ayant une constitution telle que l'insertion de la carte (10) par une Première poussée, dans le sens de l'insertion, jusqu'à sa position de butée et le retour,dans le sens coutraize, jusqu'à une position de contact déterminée sous l'action des lames flexibles de contact électrique provoquent le verrouillage de la carte dans ladite position de contact et qu'une nouvelle poussée de la carte vers la butée, dans le sens de l'insertion libère la came du verrou.

2. Dispositif selon la revendication 1, caractérisé en Ce que le verrou comprend un levier coudé (42) et une lame élastique (46), le levier coudé étant monté sur le boîtier de façon à pouvoir tourner autour d'un axe (44) perpendiculaire au plan d'introduction de la carte et la lame élastique étant capable de fléchir perpendiculairement au plan d'introduction de la carte, de part et d'autre d'une position de repos, pour suivre le profil de la came.

3. Dispositif selon la revendication 1 ou 2, caractérisé en ce que le couloir (26) a une longueur telle que la carte vient dans sa position de butée lorsque son extrémité arrière affleure l'entrée du couloir.

4. Dispositif selon la revendication 1, 2 ou 3, caractérisé en ce que les plages de contact (20) sont ménagées au fond de rainures parallèles (16) prévues dans la tranche terminale avant de la carte.

5. Dispositif selon l'une quelconque des revendications précédentes, caractérisé en ce que la carte comporte des moyens de détrompage.

6. Dispositif selon l'une quelconque des revendications précédentes, caractérisé en ce que lesdites lames flexibles de contact électrique (32) ont une forme telle qu'elles glissent sur lesdites plages de part et d'autre de la position de contact définitif au cours du mouvement d'insertion de la carte pour que les déplacements provoqués par la connexion se traduisent par un autonettoyage desdites plages.

7. Dispositif selon la revendication 2, caractérisé en ce que la came (38) comporte des surfaces d'action sur la lame élastique (40), notamment des surfaces (48,49) parallèles à la direction d'introduction, et un flanc (52), faisant faces d'appuie pour la saillie (50) pendant l'introduction de la carte, et une surface frontale (56) faisant angle avec le plan d'introduction, pour permettre la saille (50) de quitter son appui contre le flanc (52), et un second flanc (58) pour permettre la saillie (50) de quitter la carte. (Fig. 4A).

## Claims

1. Connection device comprising, on the one hand, a card having end edge electric contact areas (20) and a cam (38) formed on that end portion which is provided with the end edge contacts and, on the other hand, a reception case (22) defining a card introduction passage (26) with a stop therein for limiting the amount of insertion of the card, carrying flexible electric contact blades (32) so located as to come into abutment against said areas (20) before the card abuts against the stop during insertion and to exert on the card a force tending to move it away from the stop ; and a resilient bolt (40) carried by the case and cooperating with the cam, the cam and the bolt having such a construction that insertion of the card (10) responsive to a first pushing thrust in the direction of insertion as far as its abutment position and to the return thereof in the opposite direction, up to a determined contact position under the action of the flexible electric contact blades cause locking of the card in said contact position and that a second pushing thrust on the card toward the stop, in the direction of insertion, frees the cam from the bolt.

2. Device according to claim 1, characterized in that the bolt includes a crank lever (42) and a resilient blade (46), the crank lever being mounted on the case so as to be able to rotate about a pin (44) perpendicular to the insertion plane of the card and the resilient blade being capable of bending perpendicularly to the insertion plane of the card, on each side of a rest position, so as to follow the profile of the cam.

3. Device according to claim 1 or 2, characterized in that the passage (26) has a length such that the card comes into its abutment position when its rear end is flush with the entrance of the passage.

4. Device according to claim 1, 2 or 3, characterized in that the contact areas (20) are formed at the bottom of parallel grooves (16) provided in the end front edge of the card.

5. Device according to any one of the preceding claims, characterized in that the card includes foolproof means.

6. Device according to any one of the preceding claims, characterized in that said flexible electric contact blades (32) have a form such that they slide over said areas on each side of the final contact position during the insertion movement of the cards so that the movements caused by the connection result in self cleaning of said areas.

7. Device according to claim 2, characterized in that the cam (38) includes surfaces for acting on the resilient blades (40), particularly surfaces (48, 49) which are parallel to the direction of insertion, and a lateral edge (52), constituting surfaces of abutment for the projection (50) during insertion of the card, and a front surface (56) at an angle with the plane of insertion, for allowing the projection (50) to leave its abutment against the lateral edge (52) and a second lateral edge (58) for allowing the projection (50) to leave the card. (Fig. 4A).

## Patentansprüche

1. Steckverbindung mit einerseits:
einer Karte mit elektrischen Kontaktflächen (20) an einer Kante und einem am mit den Kontakten vesehenen Endbereich angebrachten Nocken (38) und andererseits einem Aufnahmegehäuse (22) mit einem Durchgang (26) zum Einführen der Karte, in dem ein Anschlag angebracht ist, der die Einführung der Karte begrenzt, mit flexiblen elastischen Kontaktstreifen, die angeordnet sind, um gegen die Flächen (20) zu drücken, bevor die Karte beim Einführen gegen den Anschlag drückt, und um auf die Karte eine vom Anschlag fort wirkende Kraft auszuüben und mit einem elastischen Riegel (40) am Gehäuse, der mit dem Nocken zusammenwirkt, wobei Nocken und Riegel so aufgebaut sind, daß die Einführung der Karte durch ein erstes Drücken in Einführrichtung bis zur Anschlagstellung und die Rückbewegung in Gegenrichtung bis zu einer festgelegten Kontaktstellung unter der Wirkung der flexiblen elektrischen Kontaktstreifen die Verriegelung der Karte in der Kontaktstellung bewirkt, und ein erneuter Druck der Karte auf den Anschlag in Einführungsrichtung den Nocken vom Riegel freimacht.

2. Vorrichtung nach Anspruch 1,
dadurch gekennzeichnet,
daß der Riegel einen gekröpften Hebel (42) und einen elastischen Streifen (46) umfaßt, wobei der gekröpfte Hebel am Gehäuse so montiert ist, daß er um eine zur Einführungsebene der Karte senkrechte Achse (44) drehbar ist und der elastische Streifen um eine zur Einführungsebene der Karte senkrechte Ebene beiderseits der Ruhestellung biegsam ist, um dem Profil des Nocken zu folgen.

3. Vorrichtung nach Anspruch 1 oder 2,
dadurch gekennzeichnet,
daß der Durchgang (26) eine solche Länge hat, daß die Karte ihren Anschlag erreicht, wenn ihr Hinterende mit dem Eingang des Durchgangs abschließt.

4. Vorrichtung nach Anspruch 1, 2 oder 3,
dadurch gekennzeichnet,
daß die Kontaktflächen (20) am Boden paralleler Rillen (16) angebracht sind, die an der vorderen Kante der Karte angebracht sind.

5. Vorrichtung nach einem der vorhergehenden Ansprüche,
dadurch gekennzeichnet,
daß die Karte Unverwechselbarkeitseinrichtungen umfaßt.

6. Vorrichtung nach einem der vorhergehenden Ansprüche,
dadurch gekennzeichnet,
daß die flexiblen elastischen Kontaktstreifen (32) so geformt sind, daß sie im Laufe der Einführungsbewegung der Karte auf beiden Seiten der endgültigen Kontaktstellung über die Flächen (20) gleiten, so daß die durch die Verbindung hervorgerufenen Verschiebungen zu einer Selbstreinigung der Flächen führen.

7. Vorrichtung nach Anspruch 2,
dadurch gekennzeichnet,
daµ der Nocken (38) auf den elastischen Streifen (40) wirkende Flächen umfaßt, insbesondere zur Einführungsrichtung parallele Flächen (48, 49) und eine Flanke (52), die Andruckflächen für den Vorsprung (50) während des Einführens der Karte bilden, eine Stirnfläche (56), die zur Einführebene geneigt ist, um zu ermöglichen, daR sich der Vorsprung (50) von der Flanke (52) löst und eine zweite Flanke (58), um zu ermöglichen, daß der Vorsprung (50) sich von der Karte löst (Fig. 4A).
